(19) Europäisches Patentamt
European Patent Office
Office européen des brevets

(11) **EP 1 777 392 B1**

(12) **FASCICULE DE BREVET EUROPEEN**

(45) Date de publication et mention
de la délivrance du brevet:
**31.12.2008 Bulletin 2009/01**

(51) Int Cl.:
*F02C 7/32* *(2006.01)*          *F02C 7/36* *(2006.01)*
*F02C 3/107* *(2006.01)*

(21) Numéro de dépôt: **06122694.0**

(22) Date de dépôt: **20.10.2006**

(54) **Dispositif d'entrainement de machines accessoires d'un moteur à turbine à gaz**

Antriebsvorrichtung für Hilfsantriebe eines Gasturbinenantriebs

Drive device for auxiliaries of a gas turbine engine

(84) Etats contractants désignés:
**CZ DE FR GB IT PL**

(30) Priorité: **21.10.2005 FR 0553214**

(43) Date de publication de la demande:
**25.04.2007 Bulletin 2007/17**

(73) Titulaire: **HISPANO SUIZA**
**92700 Colombes (FR)**

(72) Inventeurs:
• **Linet, Hugues Henri Raymond**
**92600 Asnieres Sur Seine (FR)**

• **Mouchnino, Cyril Franck**
**75015 Paris (FR)**
• **Pettinotti, Serge Dominique**
**92400 Courbevoie (FR)**

(74) Mandataire: **David, Daniel et al**
**Cabinet Bloch & Associés**
**23bis, rue de Turin**
**75008 Paris (FR)**

(56) Documents cités:
**FR-A- 2 520 806          FR-A- 2 863 312**
**US-A- 5 694 765**

**Description**

La présente invention concerne le domaine des moteurs à turbine à gaz multi-corps, à application aéronautique en particulier, et vise un moyen de prélèvement de puissance mécanique sur les arbres de rotor afin d'entraîner des accessoires.

Un moteur à turbine à gaz comprend de façon générale un groupe de compression d'air alimentant au moins en partie une chambre de combustion. Les gaz issus de cette dernière entraînent une ou plusieurs turbines reliées mécaniquement aux compresseurs, et fournissent la poussée. Un moteur à double corps comprend un groupe de compression dit basse pression relié par un premier arbre à un groupe de turbines basse pression, l'ensemble formant le corps basse pression, BP. Il comprend aussi un deuxième corps dit corps haute pression HP, solidaire d'un deuxième arbre concentrique au premier. Les deux rotors sont mécaniquement libres en rotation l'un par rapport à l'autre, Le corps HP est en communication directe avec la chambre de combustion. Les turboréacteurs, civils notamment, comprennent généralement un rotor de soufflante entraîné par le corps BP et délivrant une partie importante de la poussée.

Une partie de la puissance fournie par les turbomoteurs aéronautiques est utilisée pour alimenter les servitudes à la fois des turbomoteurs eux-mêmes et de l'avion dont ils assurent la propulsion.

Dans un moteur multi-corps, cette puissance est actuellement prélevée en partie mécaniquement sur l'arbre de l'étage haute pression pour entraîner un arbre récepteur d'entrée d'un boîtier à engrenages d'entraînement des accessoires. Ce boîtier est aussi désigné AGB (pour accessory gear box). Pour un turboréacteur à turbosoufflante par exemple le boîtier AGB est disposé sur le carter de la soufflante. Son arbre d'entrée est généralement entraîné par un arbre de transmission logé dans l'un des bras structuraux du carter et relié à travers un boîtier de renvoi d'angle à un pignon solidaire de l'arbre haute pression. Différentes machines accessoires, telles que générateurs et pompes hydrauliques à carburant ou à huile, sont installées dans ce boîtier, et entraînées par l'intermédiaire d'engrenages.

Une autre partie du prélèvement est constituée par l'air sous pression soutiré au compresseur haute pression pour assurer notamment la pressurisation et le conditionnement de la cabine de l'avion ou bien le dégivrage.

La tendance actuelle vise à augmenter la part du prélèvement de puissance mécanique en raison de la part croissante des moyens électriques, réputés plus souples d'emploi. Cette demande croissante de fourniture électrique pour les équipements de l'avion ne permet plus, pour de raison de fonctionnement et de performance du moteur, principalement à des régimes de rotation faible, de prélever la puissance uniquement sur le corps HP. Un tel prélèvement serait susceptible de provoquer le pompage du compresseur.

Un moyen pour augmenter le prélèvement de puissance dans les nouvelles applications de turbomoteurs est de mettre en oeuvre un système de prélèvement de puissance mécanique mixte sur les corps HP et BP du moteur, comme décrit p. ex. dans la demande de brevet d'invention FR 2 863 312 A.

Cependant les corps HP et BP tournent de manière indépendante à des vitesses différentes et possèdent des plages de fonctionnement différentes. Entre le régime de ralenti et le régime plein gaz, le rapport des vitesses pour l'arbre HP est de l'ordre de 2, par exemple la vitesse de rotation passe de 10.000 tours par minute à 20.000 tours par minute. En revanche, le rapport pour l'arbre BP est de l'ordre de 5 ; sa vitesse passe par exemple de 900 tours par minute au ralenti à 4.500 au régime plein gaz. En outre, les accessoires installés sur le boîtier AGB ont une plage de fonctionnement déterminée, compatible avec celle du corps HP.

L'invention a pour objet de réaliser un prélèvement de puissance mixte sur les corps HP et BP tout en fournissant au boîtier AGB une plage de vitesses compatible avec le fonctionnement des équipements installés sur celui-ci.

Conformément à l'invention le dispositif d'entraînement de machines auxiliaires d'un turbomoteur à turbine à gaz multi-corps, notamment à double corps, avec un corps BP et un corps HP, lesdites machines étant installées sur un boîtier et le dispositif comprenant une première transmission mécanique entre l'arbre du corps HP et ledit boîtier, est caractérisé par le fait qu'il comprend également une transmission hydraulique entre l'arbre du corps BP et ledit boîtier.

Le terme boîtier désigne un support de machines auxiliaires pourvu de moyens d'entraînement mécaniques de ces dernières à partir d'une ou plusieurs prises de mouvement.

Grâce au dispositif de l'invention, le corps BP est susceptible de participer à l'entraînement des équipements du boîtier en fonction du régime moteur. Il s'ensuit un allègement des prélèvements de puissance sur le corps HP lors des phases présentant des problèmes d'opérabilité du moteur. La transmission hydraulique permet par ailleurs de transmettre de la puissance depuis le corps BP sans imposer une vitesse de rotation, et dans la mesure où le boîtier reste entraîné mécaniquement par le corps HP, à travers cette première transmission mécanique, la vitesse en entrée est commandée par celle du corps HP. On conserve ainsi un pilotage de la vitesse du boîtier compatible avec le fonctionnement des équipements existants montés sur le boîtier.

Conformément à un premier mode de réalisation, la transmission hydraulique comprend un variateur hydrostatique avec une pompe hydraulique reliée par une deuxième transmission mécanique à l'arbre BP, et reliée par un circuit hydraulique à un moteur hydraulique, lui-même relié par une troisième transmission mécanique audit boîtier.

Plus particulièrement, la première transmission et la troisième transmission sont reliées en parallèle au boîtier. Selon la pompe utilisée, la deuxième transmission comprend un réducteur de vitesse.

Ce mode de réalisation est avantageux car il permet une grande souplesse de mise en oeuvre ; en particulier il est possible de disposer la pompe et le moteur en des endroits distincts éventuellement éloignés l'un de l'autre.

Avantageusement, au moins l'une de la pompe et du moteur est à déplacement positif, et de préférence est à cylindrée variable.

Le circuit hydraulique comprend un accumulateur de fluide en aval de la pompe, permettant ainsi son pilotage en pression. Un organe de commande du débit du moteur hydraulique permet le réglage de la puissance d'appoint apportée par l'arbre BP.

Conformément à un autre mode de réalisation, la troisième transmission mécanique comprend un engrenage différentiel à train épicycloïdal.

Cette solution permet de réduire la puissance transmise par la transmission hydraulique et par conséquent la dimension de cette partie.

Le train épicycloïdal est composé de trois étages : cage, planétaire et porte satellite, pour cette application le train épicycloïdal comporte deux étages d'entrée et un étage de sortie qui sont à déterminer en fonction de la raison du train choisi. Un étage d'entrée, l'engrenage planétaire du train épicycloïdal, est ainsi relié par une quatrième transmission mécanique à l'arbre BP, et l'arbre du moteur hydraulique est relié mécaniquement à l'autre étage d'entrée, la cage du train épicycloïdal.

Plus particulièrement, l'arbre du moteur hydraulique est relié à une entrée par un réducteur de vitesse, et l'étage de sortie, le porte satellite, est relié au boîtier.

Conformément à un troisième mode de réalisation, la transmission hydraulique comprend un coupleur hydraulique relié d'une part par une deuxième transmission mécanique à l'arbre BP, d'autre part par une troisième transmission audit boîtier. On assure le contrôle de la puissance transmise par un moyen de commande de remplissage en liquide.

Comme dans les cas précédents, l'invention permet de conserver un pilotage de la vitesse du boîtier par le corps HP, compatible avec le fonctionnement des équipements moteur et avion. Elle permet aussi de transmettre la puissance aux accessoires issue du corps BP et d'alléger les prélèvements de puissance sur le corps HP lors de phase présentant des problèmes d'opérabilité moteur.

Elle permet encore de limiter les pertes dues à la transmission hydrocinétique pour les régimes autorisant le prélèvement de puissance 100 % sur le corps HP.

Ce mode de réalisation présente plus particulièrement l'avantage d'une grande simplicité de mise en oeuvre même si le coupleur est en soi un équipement plus encombrant que la solution hydraulique précédente.

D'autres caractéristiques et avantages ressortiront de la description des trois modes de réalisation de l'invention accompagnée des dessins annexés sur lesquels

La figure 1 est une représentation schématique d'un exemple se rapportant au premier mode de réalisation ;
La figure 2 est une représentation schématique d'un exemple se rapportant au deuxième mode de réalisation ;
La figure 3 est une représentation schématique d'un exemple se rapportant au troisième mode de réalisation.

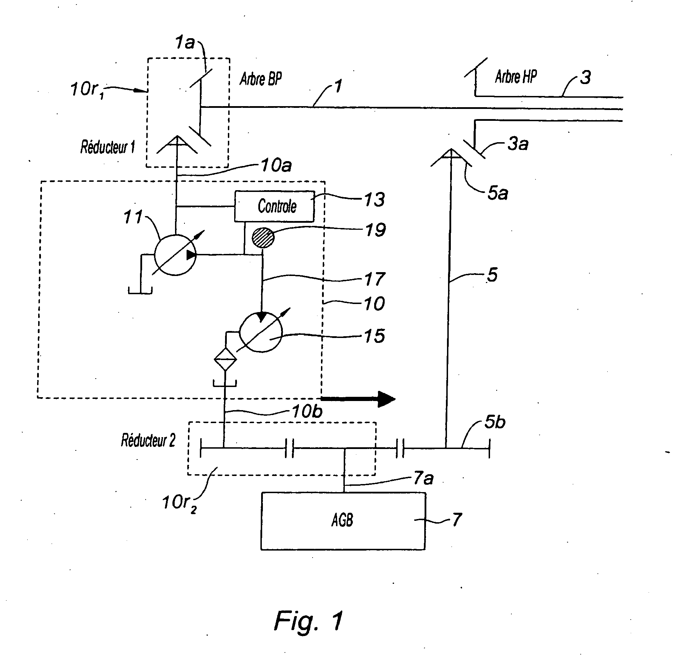

Le mode de réalisation en référence à la figure 1 porte sur un moteur à turbine à gaz à double corps ; on n'a représenté du turbomoteur que les deux arbres 1 et 3, l'un correspond au corps BP et l'autre au corps HP. Comme cela est connu des réalisations courantes, les deux arbres sont concentriques et libres mécaniquement en rotation l'un par rapport à l'autre. Selon le type de moteur, ils sont co-rotatifs ou bien contrarotatifs en fonctionnement. L'arbre BP est monté par des paliers appropriés à l'intérieur de l'arbre HP. Dans le cas d'un turboréacteur à double flux, il entraîne une soufflante, par exemple disposée sur l'avant.

Chacun des deux arbres est pourvu d'un pignon, 1a et 3a respectivement, pour l'entraînement d'arbres de transmission. Un premier arbre 5, formant une première transmission mécanique, avec, à une extrémité, un organe de prise de mouvement 5a, un pignon par exemple, sur l'arbre HP est disposé radialement par rapport à l'axe du moteur, défini par les deux arbres 1 et 3. Il transmet à son autre extrémité par un engrenage 5b, le mouvement de rotation à un arbre d'entrée 7a du boîtier d'accessoires 7. Ce boîtier ne sera pas décrit, non plus, plus en détail dans la mesure où il ne fait pas partie de l'invention. Il comprend un châssis, pourvu d'engrenages reliés à un ou plusieurs arbres de prise de mouvement. La composition des éléments qui sont montés dans le boîtier dépend du moteur qu'il sert. Notamment dans le cas où le moteur est un turbo réacteur à turbo soufflante civil, le boîtier est accroché au carter de soufflante et l'arbre de transmission 5 est disposé radialement dans un bras structural du carter.

Conformément à l'invention, selon ce premier mode de réalisation, l'arbre d'entrée 7a est entraîné par un moyen de transmission hydraulique 10, qui est un variateur hydrostatique, depuis l'arbre BP. Le moyen 10 est relié mécaniquement par une deuxième transmission mécanique 10r1 à l'arbre 1. Il peut s'agir d'un pignon engrenant sur un pignon solidaire de l'arbre 1. Il peut s'agir aussi d'un dispositif réducteur de vitesse si cela est nécessaire. Le moyen 10 est relié mécaniquement par un arbre 10b à l'arbre d'entrée 7a du boîtier par l'intermédiaire ici d'un dispositif réducteur de vitesse, formant une troisième transmission mécanique 10r2. La transmission hydrostatique comprend une pompe 11 entraînée mécaniquement par l'arbre 10a. Le réducteur 10r1 permet d'adapter la vitesse de l'arbre d'entrée à celle de la pompe. Il s'agit avantageusement d'une pompe à déplacement positif à cylindrée variable. Un exemple de ce type de pompe comporte un plateau à inclinaison réglable. La variation de l'angle d'inclinaison du plateau modifie la course des pistons de la pompe et sa cylindrée. La cylindrée est commandée par un organe de contrôle 13. La pompe alimente en fluide hydraulique un moteur hydraulique 15 à cylindrée variable également par un conduit 17. Un accumulateur de fluide 19 est disposé en parallèle sur ce conduit 17 en aval de la pompe. On note que dans ce système le circuit hydraulique est indépendant des autres circuits hydrauliques.

La gestion du prélèvement de puissance sur le corps BP est obtenue en pilotant la pompe 11 et le moteur 15 par le dispositif de contrôle 13 en fonction notamment des vitesses des arbres 10a et 10b et de la pression délivrée par la pompe.

La vitesse du moteur hydraulique est imposée par la vitesse de rotation de l'arbre 7a liée de manière cinématique avec le corps HP. Il s'ensuit que, quel que soit le régime moteur, le boîtier entraîne les équipements qu'il supporte à une vitesse qui présente la même plage de fonctionnement que le corps HP.

Le dispositif fonctionne de la façon suivante pendant la phase de multiprélèvement.

Selon une première option, on maintient la pression de service de la pompe 11 à une valeur constante : $\Delta P = 350$ b par exemple. Le pilotage du moteur 15 est obtenu par variation de sa cylindrée. En effet la puissance transmise par celui-ci est donnée par la relation :

$$\text{Puissance moteur} = \text{vitesse du moteur x cylindrée x } \Delta P.$$

Comme la vitesse du moteur est imposée par celle du corps HP, et la pression de service est maintenue constante par la pompe, la puissance du moteur est proportionnelle au volume de fluide qui le traverse donc à la cylindrée.

Selon une seconde option, on maintient la cylindrée du moteur à sa valeur maximale, la puissance transmise est alors proportionnelle à $\Delta P$. Le pilotage en pression du circuit hydraulique est effectué par variation de la cylindrée de la pompe.

Un avantage de la solution ici présentée est que ce système n'introduit aucune liaison cinématique entre les deux corps, BP et HP.

Par ailleurs, passé un certain régime, le corps HP se trouve dans un domaine de fonctionnement lui permettant de fournir l'ensemble de la puissance au boîtier. Le système de prélèvement mixte de puissance peut alors être désactivé. Pour ce faire le système de contrôle 13 pilote la pompe et le moteur en annulation de pression et de débit. La pompe et le moteur sont alors placés en dépression afin de réduire les pertes et les traînées.

De même au démarrage, si celui-ci est fait par l'intermédiaire du boîtier, on transmet la puissance depuis le moteur de démarrage directement à l'arbre HP et on met au repos la transmission hydrostatique. Les plateaux de la pompe et du moteur sont pilotés pour donner la cylindrée minimale. En effet le démarrage est réalisé par entraînement du corps HP seul.

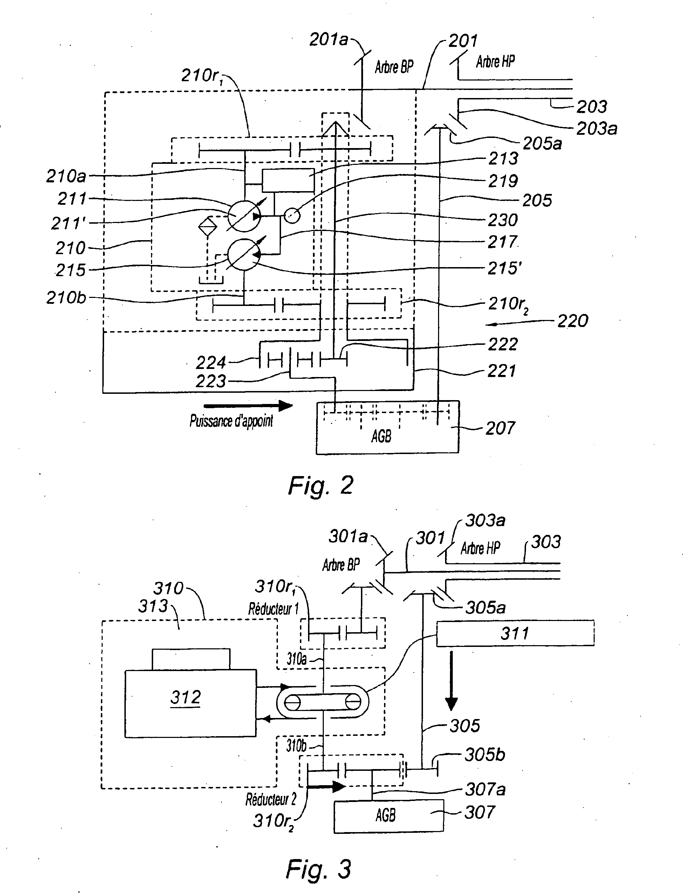

En se reportant à la figure 2, portant sur un deuxième mode de réalisation, on a représenté les éléments correspondants à ceux de la figure 1, en ajoutant 200 aux chiffres de référence. On retrouve l'arbre 201 BP et l'arbre 203 HP d'un turbomoteur à double corps, non représenté. L'arbre 203 est relié au boîtier 207 des machines auxiliaires, AGB, par une première transmission mécanique 205, ici un arbre de transmission engrenant par un pignon 205a avec un pignon 203a de l'arbre HP, les deux formant un renvoi d'angle.

Conformément à l'invention une transmission hydraulique est ménagée entre l'arbre BP 201 et le boîtier 207. Cette transmission fait partie d'une transmission hydromécanique, décrite ci-après.

La partie hydrostatique de la transmission comprend comme dans la solution précédente un variateur hydrostatique 210. Celui-ci comprend une pompe hydraulique 211 et un moteur hydraulique 215 reliés par une circuit hydraulique 217. Les deux machines 211 et 217 sont à cylindrée variable, cela est figuré par les flèches 211' et 215' respectivement. Un accumulateur est disposé en parallèle sur le circuit 217 et permet un pilotage de la pompe en pression. Un organe de commande 213 reçoit les paramètres vitesses de chacun des arbres 210a et 210b des deux machines, la pression du circuit ainsi que des valeurs de consigne, et envoie un signal de commande de la cylindrée du moteur 216 et/ou de la pompe comme dans le premier mode de réalisation.

L'arbre 210a d'entraînement de la pompe 211 est relié par une deuxième transmission mécanique 210r1 à l'arbre BP. Il s'agit notamment d'un réducteur de vitesse pour adapter les deux vitesses entre elles.

L'arbre 210b entraîné par le moteur 215 est relié au boîtier 207 par une troisième transmission mécanique 220.

Celle-ci comprend un différentiel à train épicycloïdal 221. Celui-ci est composé d'un engrenage planétaire 222, de pignons satellites avec leur porte satellite 223, et d'une cage 224. Le planétaire 222 est relié par une quatrième transmission mécanique 230 à l'arbre BP, ici représenté par un arbre de transmission engrenant avec l'arbre 201. Entre l'arbre 210b du moteur hydraulique 215 et la cage 224 du différentiel 221, la troisième transmission 220 comprend en outre un réducteur de vitesse 210r2. Le porte satellite 223 est relié à un arbre d'entrée du boîtier 207.

Par ce montage le corps BP transmet de la puissance directement à l'entrée, formé par le planétaire 222 du train épicycloïdal 221 et indirectement à l'entrée, formée par la cage 224 via le variateur hydrostatique. La sortie du train épicycloïdal 221, formée par le porte satellite 223, est reliée à l'AGB.

Les vitesses de l'entrée et de la sortie du train épicycloïdal 221 sont imposées respectivement par le corps BP, par l'intermédiaire de la quatrième transmission mécanique 230 et par le boîtier 207 lié au corps HP par la première transmission 205. La vitesse du moteur hydraulique 215 est alors fixée par la raison du train épicycloïdal.

La raison du train épicycloïdal est choisie de manière à minimiser la puissance transitant par la transmission hydrostatique et réduire les pertes au régime maximum d'utilisation.

Le dispositif fonctionne de la même façon que le premier mode de réalisation.

Pendant la phase de multiprélèvement.

Selon une première option, on maintient la pression de service de la pompe 211 à une valeur constante : ΔP=350 b par exemple. Le pilotage du moteur 215 est obtenu par variation de sa cylindrée.

Comme la vitesse du moteur est imposée par celle du corps HP, et la pression de service est maintenue constante par la pompe, la puissance du moteur est proportionnelle au volume de fluide qui le traverse donc à la cylindrée.

Selon une seconde option, on maintient la cylindrée du moteur à sa valeur maximale, la puissance transmise est alors proportionnelle à ΔP. Le pilotage en pression du circuit hydraulique est effectué par variation de la cylindrée de la pompe.

Passé un certain régime, le corps HP se trouve dans un domaine de fonctionnement lui permettant de fournir l'ensemble de la puissance au boîtier. Le système de prélèvement mixte de puissance peut alors être désactivé. Pour ce faire le système de contrôle 213 pilote la pompe et le moteur en annulation de pression et de débit. La pompe et le moteur sont alors placés en dépression afin de réduire les pertes et les traînées.

De même au démarrage, si celui-ci est fait par l'intermédiaire du boîtier, on transmet la puissance depuis le moteur de démarrage directement à l'arbre HP et on met au repos la transmission hydrostatique. Les plateaux de la pompe et du moteur sont pilotés pour donner la cylindrée minimale. En effet le démarrage est réalisé par entraînement du corps HP seul.

En se reportant à la figure 3, portant sur un troisième mode de réalisation, on a représenté les éléments correspondants à ceux de la figure 1, en ajoutant 300 aux chiffres de référence.

On voit un premier et un deuxième arbres 301 et 303 respectivement. Ce sont les arbres BP et HP respectivement d'un moteur à turbine à gaz à double corps non représenté. Ces deux arbres sont pourvus de pignons appropriés 301a et 303a pour la prise de mouvement. Le premier permet la prise de mouvement par l'arbre 310a d'entrée d'un dispositif de transmission ici hydrocinétique 310. Le second 303a permet la prise de mouvement par le pignon 305a d'un arbre de transmission 305 formant le premier moyen de transmission. Entre le pignon 301a et l'arbre d'entrée 310a, une deuxième transmission mécanique 310r1 est prévue sous la forme d'un réducteur de vitesse

Comme dans les cas précédents, un boîtier d'accessoires 307, déporté par rapport au moteur, est entraîné par ces deux moyens. Le premier moyen 310 comprend un arbre 310b entraînant l'arbre 307a par l'intermédiaire d'un dispositif réducteur de vitesse 310r2, formant une troisième transmission mécanique. L'arbre 307a est également entraîné en rotation par l'arbre 305 par l'intermédiaire d'un engrenage 305b approprié.

La transmission hydrocinétique est en soi connue ; elle comprend un coupleur hydraulique, désigné aussi convertisseur hydraulique de couple, 311 relié à un système de pilotage 312 par remplissage partiel. Le système 312 comprend une pompe de remplissage et de vidange commandée par un organe de contrôle 313. Le coupleur hydraulique est, comme cela est connu, constitué d'un premier rotor pourvu d'ailettes formant pompe, faisant face à un second rotor formant turbine. Lorsque le rotor est entraîné en rotation, les ailettes chassent le fluide hydraulique dans les ailettes du second rotor formant turbine et le mettent en mouvement. En faisant varier la quantité de fluide présent entre les deux rotors, on fait varier aussi la puissance transmise d'un rotor à l'autre dans la mesure où la vitesse du second rotor est imposée par celle au réducteur 310r2. Ce système comme le premier, présente l'avantage de n'introduire aucune liaison cinématique entre les corps BP et HP.

Les rapports de réduction des deux réducteurs sont choisis de manière à créer un glissement en vitesse positif entre la pompe et la turbine de la transmission hydrocinétique dans la plage de fonctionnement des deux corps du turbomoteur. La vitesse de rotation de la turbine du système est imposée par la vitesse de rotation du boîtier liée elle-même de manière cinétique avec le corps HP. Le boîtier entraîne alors les équipements avec une vitesse ayant la même plage de fonctionnement que celle du corps HP.

La puissance transmise par la transmission 310 est proportionnelle à la vitesse de rotation de la pompe et du débit de fluide. Ce débit de fluide est régulé par le système réalisant un remplissage partiel de la transmission 310 et contrôlé en fonction des vitesses BP et HP. Ce système de pilotage permet d'obtenir le prélèvement de puissance désiré sur le corps BP.

Au-delà d'un certain régime, le corps HP se trouve dans un domaine de fonctionnement lui permettant de fournir l'ensemble de la puissance au boîtier. Le système de prélèvement de puissance peut alors être désactivé. Pour ce faire la transmission 310 est vidée et placée en dépression afin de réduire les pertes et les traînées.

**Revendications**

1.  Dispositif d'entraînement de machines auxiliaires d'un turbomoteurs à turbine à gaz à double corps avec un corps BP et un corps HP, lesdites machines étant installées dans un boîtier (7, 207, 307) et le dispositif comprenant une première transmission mécanique (5, 205, 305) entre l'arbre du corps HP (3, 203, 303) et ledit boîtier, **caractérisé par le fait qu'**il comprend également une transmission hydraulique (10, 210, 310) entre l'arbre du corps BP (1, 201, 301) et ledit boîtier

2.  Dispositif selon la revendication 1 dont la transmission hydraulique comprend un variateur hydrostatique avec une pompe hydraulique (11, 211) reliée par une deuxième transmission mécanique (10r1, 210r1) à l'arbre BP (1, 201, 301), et reliée par un circuit hydraulique (17, 217) à un moteur hydraulique (15, 215), relié par une troisième transmission mécanique (10r2, 220) audit boîtier.

3.  Dispositif selon la revendication 2 dont la troisième transmission (10r2, 220) et la première transmission (5, 205) sont reliées en parallèle au boîtier.

4.  Dispositif selon la revendication 2 ou 3 dont la deuxième transmission (10r1, 210r1 ) comprend un réducteur de vitesse.

5.  Dispositif selon la revendication 2 dont au moins l'une de la pompe et du moteur est à déplacement positif.

6.  Dispositif selon la revendication 3 dont la pompe et/ou le moteur sont à cylindrée variable.

7.  Dispositif selon l'une des revendications 2 à 6 dont le circuit comprend un accumulateur (19, 219) de fluide en aval de la pompe.

8.  Dispositif selon la revendication 2 comprenant un organe de commande (13, 213) du débit du moteur hydraulique.

9.  Dispositif selon l'une des revendications 2 à 8 dont la troisième transmission mécanique (220) comprend un engrenage différentiel à train épicycloïdal (221) composé de trois étages : cage, planétaire et porte-satellite.

10. Dispositif selon la revendication précédente dont un étage d'entrée, l'engrenage planétaire par exemple, du train épicycloïdal (221) est relié par une quatrième transmission mécanique (230) à l'arbre BP (201).

11. Dispositif selon la revendication précédente dont l'arbre (210b) du moteur hydraulique (215) est relié à l'autre étage d'entrée, la cage (224) par exemple, du train épicycloïdal (221).

12. Dispositif selon la revendication précédente dont l'arbre (210b) du moteur hydraulique est relié à l'entrée, du train épicycloïdal (221) par un réducteur de vitesse (210r2).

13. Dispositif selon l'une des revendications 9 à 12 dont l'étage de sortie, le porte satellite (223) par exemple, est relié au boîtier (207).

14. Dispositif selon la revendication 1 dont la transmission hydraulique comprend un coupleur hydraulique (311) relié d'une part par une deuxième transmission mécanique (310r1) à l'arbre BP (301), d'autre part par une troisième transmission (310r2) audit boîtier (307).

15. Dispositif selon la revendication précédente dont le coupleur (311) comprend un moyen de commande (312) de remplissage en liquide.

**Claims**

1.  Device for driving auxiliary machines of a double-spool gas turbine engine with an LP spool and an HP spool, the said machines being installed in a gearbox (7, 207, 307) and the device comprising a first mechanical transmission (5, 205, 305) between the shaft of the HP spool (3, 203, 303) and the said gearbox, **characterized in that** it also comprises a hydraulic transmission (10, 210, 310) between the shaft of the LP spool (1, 201, 301) and the said gearbox.

2. Device according to Claim 1, in which the hydraulic transmission comprises a hydrostatic variator with a hydraulic pump (11, 211) connected via a second mechanical transmission (10r1, 210r1) to the LP shaft (1, 201, 301), and connected via a hydraulic circuit (17, 217) to a hydraulic motor (15, 215), connected via a third mechanical transmission (10r2, 220) to the said gearbox.

3. Device according to Claim 2, in which the third transmission (10r2, 220) and the first transmission (5, 205) are connected in parallel to the gearbox.

4. Device according to Claim 2 or 3, in which the second transmission (10r1, 210r1) comprises a speed reduction gear.

5. Device according to Claim 2, in which at least one of the pump and the motor has positive displacement.

6. Device according to Claim 3, in which the pump and/or the motor have variable cubic capacity.

7. Device according to one of Claims 2 to 6, in which the circuit comprises a fluid accumulator (19, 219) downstream of the pump.

8. Device according to Claim 2, comprising a member (13, 213) for controlling the output of the hydraulic motor.

9. Device according to one of Claims 2 to 8, in which the third mechanical transmission (220) comprises a differential gear with an epicyclic gear set (221) consisting of three stages: cage, sun gear and planet carrier.

10. Device according to the preceding claim, in which an input stage, the sun gear set for example, of the epicyclic gear set (221) is connected via a fourth mechanical transmission (230) to the LP shaft (201).

11. Device according to the preceding claim, in which the shaft (210b) of the hydraulic motor (215) is connected to the other input stage, the cage (224) for example, of the epicyclic gear set (221).

12. Device according to the preceding claim in which the shaft (210b) of the hydraulic motor is connected to the input of the epicyclic gear set (221) via a speed reduction gear (210r2).

13. Device according to one of Claims 9 to 12, in which the output stage, the planet carrier (223) for example, is connected to the gearbox (207).

14. Device according to Claim 1, in which the hydraulic transmission comprises a hydraulic coupler (311) connected, on the one hand, via a second mechanical transmission (310r1), to the LP shaft (301), on the other hand, via a third transmission (310r2), to the said gearbox (307).

15. Device according to the preceding claim, in which the coupler (311) comprises a control means (312) for filling with liquid.


**Patentansprüche**

1. Antriebsvorrichtung für Hilfsmaschinen eines Zweikreis-Gasturbinentriebwerks mit einem Körper BP und einem Körper HP, wobei die Maschinen in einem Gehäuse (7, 207, 307) installiert sind und die Vorrichtung ein erstes mechanisches Getriebe (5, 205, 305) zwischen der Welle des Körpers HP (3, 203, 303) und dem Gehäuse aufweist, **dadurch gekennzeichnet, daß** sie auch ein Hydraulikgetriebe (10, 210, 310) zwischen der Welle des Körpers BP (1, 201, 301) und dem Gehäuse aufweist.

2. Vorrichtung nach Anspruch 1, deren Hydraulikgetriebe einen hydrostatischen Geschwindigkeitswandler mit einer Hydraulikpumpe (11, 211) aufweist, die durch ein zweites mechanisches Getriebe (10r1, 210r1) mit der Welle BP (1, 201, 301) verbunden und durch einen Hydraulikkreis (17, 217) mit einem Hydraulikmotor (15, 215) verbunden ist, der durch ein drittes mechanisches Getriebe (10r2, 220) mit dem Gehäuse verbunden ist.

3. Vorrichtung nach Anspruch 2, deren drittes Getriebe (10r2, 220) und erstes Getriebe (5, 205) parallel mit dem Gehäuse verbunden sind.

4. Vorrichtung nach Anspruch 2 oder 3, deren zweites Getriebe (10r1, 210r1) ein Untersetzungsgetriebe aufweist.

5. Vorrichtung nach Anspruch 2, von welcher wenigstens die Pumpe oder der Motor mit positiver Verschiebung ist.

6. Vorrichtung nach Anspruch 3, von welcher die Pumpe und/oder der Motor mit variablem Hubraum sind.

7. Vorrichtung nach einem der Ansprüche 2 bis 6, deren Kreis einen Fluiddruckspeicher (19, 219) stromabwärts von der Pumpe aufweist.

8. Vorrichtung nach Anspruch 2 mit einem Steuerorgan (13, 213) für den Durchsatz des Hydraulikmotors.

9. Vorrichtung nach einem der Ansprüche 2 bis 8, deren drittes mechanisches Getriebe (220) ein Differentialgetriebe mit Planetengetriebezug (221) aufweist, der aus drei Stufen besteht: Käfig, Planetenrad und Planetenradträger.

10. Vorrichtung nach dem vorhergehenden Anspruch, von welcher eine Eingangsstufe des Planetengetriebezuges (221), z.B. das Planetengetriebe, durch ein viertes mechanisches Getriebe (230) mit der Welle BP (201) verbunden ist.

11. Vorrichtung nach dem vorhergehenden Anspruch, von welcher die Welle (210b) des Hydraulikmotors (215) mit der anderen Eingangsstufe des Planetengetriebezuges (221), z.B. dem Käfig (224) verbunden ist.

12. Vorrichtung nach dem vorhergehenden Anspruch, von welcher die Welle (210b) des Hydraulikmotors mit dem Eingang des Planetengetriebezuges (221) durch ein Untersetzungsgetriebe (210r2) verbunden ist.

13. Vorrichtung nach einem der Ansprüche 9 bis 12, deren Ausgangsstufe, z.B. der Planetenradträger (223), mit dem Gehäuse (207) verbunden ist.

14. Vorrichtung nach Anspruch 1, deren Hydraulikgetriebe einen Hydraulikkoppler (311) aufweist, der einerseits durch ein zweites mechanisches Getriebe (310r1) mit der Welle BP (301) verbunden ist, anderseits durch ein drittes Getriebe (310r2) mit dem Gehäuse (307).

15. Vorrichtung nach dem vorhergehenden Anspruch, deren Koppler (311) ein Steuermittel (312) für die Flüssigkeits-fiillung aufweist.

Fig. 1

*201a*    *201*    Arbre HP

*210r₁*

Arbre BP

*203*
*203a*
*205a*
*210a* —    — *213*
*211* —    — *219*
*211'* —    — *205*
*210* —    — *230*
*215* —    — *217*
— *215'*
*210b* —    *210r₂*
— *220*
— *222*
*224* —    — *221*
*223* —

Puissance d'appoint

AGB — *207*

**Fig. 2**

*301a*    *301*    *303a*    *303*

Arbre BP    Arbre HP

*310*    *310r₁*
*313*    Réducteur 1

*305a*

*310a*

*311*

*312*

*305*

*310b*

*305b*

Réducteur 2    *307a*

*310r₂*    AGB — *307*

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2863312 A